# EUROPEAN PATENT APPLICATION

(11) **EP 4 470 852 A1**
(43) Date of publication of application: **04.12.2024**
(21) Application number: 23176038.0
(22) Date of filing: 30.05.2023
(51) Int. Cl.: B60T 7/22

(54) **ADAPTIVE CRUISE CONTROL BASED ON FRICTION**

(71) Applicant: Scania CV AB, 151 87 Södertälje (SE)
(72) Inventor: STAMP, Alexander, 141 63 Huddinge (SE); ALENIUS, Mikael, 141 72 Segeltorp (SE)
(74) Representative: Scania CV AB

(57) **Abstract**

The present disclosure relates to a method for controlling operation of a vehicle. In particular the disclosure relates to adaptive cruise control. According to a first aspect, the disclosure relates a method for controlling operation of a vehicle 1 comprising secondary brakes 13. The method comprises obtaining S1 friction data indicative of friction between a road surface and a tire of the vehicle and determining S2, based on the obtained friction data and based on current operating conditions of the vehicle, braking capacity of the secondary brakes. The method further comprises controlling S4 the vehicle to automatically actuate the secondary brakes, in response to the vehicle reaching a brake actuation distance to a vehicle travelling ahead, wherein the brake actuation distance is based on the estimated braking capacity of the secondary brakes. The disclosure also relates to corresponding control arrangement and computer program, and to a vehicle comprising the control arrangement.

## Description

### Technical Field

The present disclosure relates to a method for controlling operation of a vehicle. In particular the disclosure relates to adaptive cruise control. The disclosure also relates to corresponding control arrangement and computer program, and to a vehicle comprising the control arrangement.

### Background

Adaptive Cruise Control (ACC) systems use an on-board sensors to detect the distance between the host vehicle and a vehicle travelling ahead of the host, and the relative speed difference between the vehicles. The ACC automatically adjusts the speed of the host vehicle to keep it at a pre-set distance or time gap behind the vehicle travelling ahead. More specifically, the adaptive cruise control system generates automatic interventions in the powertrain and/or braking systems of the host vehicle to slow the vehicle as necessary to maintain a target following distance. The target following distance is based on the pre-set following distance or time gap but may also be influenced by other factors such as power efficiency, road conditions and safety requirements.

A problem with present ACC systems is they do not drive very safely on bad roads in bad weather conditions. The consequence is that drivers often shuts off ACC, as they think it drives oddly or unsafely.

### Summary

It is an objective of the present disclosure to provide methods enabling safe and efficient cruise control also on bad road conditions. It is a further objective to provide techniques that makes an ACC drive in a more human fashion, whereby it is avoided that the driver will shut off the cruise control. In particular it is an objective to provide a cruise controller that reduced usage of primary brakes, such as friction brakes. These objectives and others are at least partly achieved by the method, control arrangement, and vehicle according to the independent claims, and by the embodiments according to the dependent claims.

According to a first aspect, the disclosure relates a method for controlling operation of a vehicle comprising secondary brakes. The method comprises obtaining friction data indicative of friction between a road surface and a tire of the vehicle and determining, based on the obtained friction data and based on current operating conditions of the vehicle, braking capacity of the secondary brakes. The method further comprises controlling the vehicle to automatically actuate the secondary brakes, in response to the vehicle reaching a brake actuation distance to a vehicle travelling ahead, wherein the brake actuation distance is based on the estimated braking capacity of the secondary brakes. By considering friction and capacity of secondary brakes in determining when to actuate secondary brakes driving can be performed in a safer and smother way, i.e. it will be performed in a more human fashion.

In some embodiments, the brake actuation distance is long enough to ensure that a braking force required to maintain a safety distance to the vehicle travelling ahead, does not exceed the estimated braking capacity of the secondary brakes. By considering friction when actuating secondary brakes the risk that primary brakes are used unnecessarily is avoided. Thereby, energy losses, and tear and tear is reduced. In some embodiments, the safety distance corresponds to a distance where primary brakes are automatically actuated. Hence, automatic actuation of primary brakes is avoided.

In some embodiments, required braking forces above a certain level are disregarded as a basis for the brake actuation distance. Thereby, exceptional braking forces, which are typically required very seldom, but in turn would require a very long brake actuation distance, can be disregarded. Thus, by disregarding braking forces above a certain level, the brake actuation distance can be kept reasonably long.

In some embodiments, the certain level corresponds to a braking force applied by the vehicle, and/or a measured braking force applied by the vehicle travelling ahead, during a certain preceding time period. Hence, braking forces that have not been applied recently (e.g., last 5-10 minutes) can be disregarded as a basis for the brake actuation distance.

In some embodiments, the brake actuation distance is adjusted based on the friction data and/or road inclination. Hence, the brake actuation distance can be adjusted to consider road properties that may affect braking distance.

In some embodiments, the brake actuation distance is longer than a configured following distance upon the determined braking force falling below a predefined value. Hence, the secondary may be automatically actuated before the vehicle reaches a configured following distance set for example by a driver.

In some embodiments, the method comprises estimating a braking force required to maintain the safety distance to the vehicle travelling ahead based on operating conditions of the vehicle, and one or more of: physical properties, braking behaviour, driving speed and acceleration of the vehicle travelling ahead. In these embodiments the method comprises determining the brake actuation distance such that the estimated braking force matches the determined braking capacity of the secondary brakes. Thereby, the brake actuation distance may be set such that braking may be performed using only secondary brakes.

In some embodiments, the brake actuation distance depend on braking distance of the secondary brakes for the determined braking capacity and the current operating condition. Hence, the brake actuation distance depend on braking distance of secondary brakes under current road conditions, whereby the brake actuation distance is determined in an improved way.

In some embodiments, the obtaining friction data comprises one or more of: calculating the friction data based on sensor readings and vehicle properties, and receiving friction data from other vehicles, from road objects, or from a data storage. Hence, friction data may be obtained in various ways.

In some embodiments, the current operating conditions comprises one or more of road inclination, temperature, velocity, acceleration, historic or predicted braking behavior, map data, axle load, weather conditions and battery State of Charge, SoC. Thus, various parameters influencing braking capacity of secondary brakes may be considered in addition to the friction, whereby an improved determination of the braking capacity is obtained.

In some embodiments, the controlling comprises, performing particular measures, including increasing the minimum following distance, slowing down or limiting acceleration, upon the friction data indicating that the vehicle travelling ahead is driving on a road segment having friction below a certain threshold. Hence, additional measures may be taken when the road conditions are extremely poor Thereby, safety can be increased under exceptional road conditions.

In some embodiments, the controlling comprises activating differential locks upon the friction data indicating an upcom ing road segment having friction below a certain threshold. Activating differential locks on slippery roads can be beneficial because it helps provide better traction and control of the vehicle.

In some embodiments, the controlling comprises activating an acceleration limitation of the vehicle upon the friction data indicating an upcoming road segment having friction below a certain threshold. Thereby, the driver may maintain better control of the vehicle, whereby the risk of accidents is reduced.

In some embodiments, the controlling comprises providing an indication to a driver to change lane, wherein the lane change deactivates the acceleration limitation. Hence, the driver may be informed about how the acceleration limitation can be removed.

In some embodiments, the secondary brakes comprises regenerative brakes and/or auxiliary brakes. Secondary brakes typically cause less power loss and tear than the primary brakes, which commonly use friction. Hence, by reducing usage of primary brakes power losses and tear is typically reduced.

In some embodiments, the determining is based on braking capacity criteria defining braking capacity based on the obtained friction data and based on current operating conditions and/or wherein the brake actuation distance is determined based on one or more distance criteria. Hence, various algorithms and mathematical models may be used to implement the proposed method.

According to a second aspect, the disclosure relates to a computer program comprising instructions which, when the computer program is executed by a computer, cause the computer to carry out the method according to the first aspect. According to a third aspect, the disclosure relates to a computer-readable medium comprising instructions which, when executed by a computer, cause the computer to carry out the method according to the first aspect.

According to a fourth aspect, the disclosure relates to a control arrangement configured to perform the method according to the first aspect.

According to a fifth aspect, the disclosure relates to a vehicle comprising the system according to the fourth aspect.

Corresponding effects as for the first aspect can be achieved by the second to fifth aspects.

### Brief description of the drawings

The embodiments disclosed herein are illustrated by way of example, and by not by way of limitation, in the figures of the accompanying drawings. Like reference numerals refer to corresponding parts throughout the drawings, in which:
Fig. 1 illustrates a vehicle comprising secondary brakes.
Fig. 2a-b illustrates distances considered by an adaptive cruise control system.
Fig. 3 illustrates a vehicle obtaining friction data.
Fig. 4a-b is a flow chart of an example method according to the first aspect.
Fig. 5 illustrates a control arrangement configured to perform the proposed method.

### Detailed description

An Adaptive Cruise Control (ACC) system uses radar, lidar or other sensors to detect the distance between the vehicle and other vehicles on the road. If the ACC determines that the vehicle is getting too close to the vehicle travelling ahead, it can actuate the brakes to slow the vehicle down and maintain a safe distance.

Heavy vehicles, such as trucks typically include a primary braking system, such as frictional brakes and one or more secondary braking systems separate from the primary braking system. Because the secondary brakes do generally not rely on friction it is typically preferable to use the secondary brakes, to avoid overheating and tear of the frictional brakes. In particular, it is beneficial to use regenerative brakes as they cause less power loss as the motion is converted to electrical energy that can be fed back to the battery. The proposed technique is based on the idea that road conditions, in particular friction, can be considered by the ACC in order to optimise braking, such that unnecessary use of primary brakes is avoided.

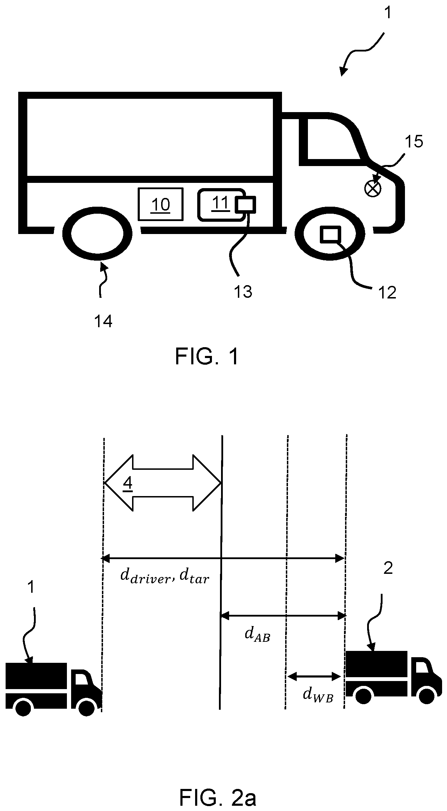

Fig. 1 illustrates a vehicle 1 where the proposed technique may be implemented. The vehicle 1 may comprise a means for transportation in broad sense and is for example a bus, a truck, or other similar manned or unmanned vehicle. The illustrated vehicle 1, here a truck, comprises a propulsion arrangement 11, primary brakes 12, secondary brakes 13, tires 14, sensors 15 and a control arrangement 10 (that for example implements ACC).

The propulsion arrangement 11 comprises an engine and a transmission line that transfers the motion to the wheels of the vehicle 1. The engine may include one or more of a combustion engine and an electrical engine. The primary brakes 12 are typically disc brakes or drum brakes, while the secondary brakes 13 comprises auxiliary brakes such as engine brakes or a retarder. In an electrical or hybrid vehicle the secondary brakes 13 may also include regenerative brakes that recover braking energy and converts it into electricity.

The vehicle 1 also comprises sensors 15 used to monitor different functions and states of the vehicle 1, to provide information to the driver or to different systems of the vehicle 1. The sensors 15 may include one or more of: speed sensors, temperature sensors, position sensors, motion sensors, gyros, power sensors pressure sensors, humidity sensors, rain sensors etc. Each sensor 15 converts sensed events or changes of a property into a signal or data that is sent to, or collected by, the control arrangement 10. Such signals or data are, for example, sent over a CAN (Controller Area Network), or similar, of vehicle 1.

The plurality of sensors 15 comprises vehicle sensors (such as LIDAR, RADAR and image sensors) for monitoring the surroundings of the vehicle 1. The output from the vehicle sensors 15 may provide input to the ACC or to an autonomous control system of the control arrangement 10, for use in autonomous driving.

Fig. 2a illustrates distances considered by an adaptive cruise control system. When an ACC is activated a user (often the driver) enters a desired following distance *d_{driver}.* The desired following distance *d_{driver}* may be defined in meters (e.g. 10 meters) or in time (e.g. 3 seconds). The ACC then configures a target following distance *dₜₐᵣ,* which is a distance between the vehicle 1 and a vehicle travelling ahead 2 (herein also simply called the followed vehicle 2) that the ACC tries to maintain. The ACC will of course consider the desired following distance *d_{driver}* when setting the target following distance *dₜₐᵣ,* but in some situations there may be a deviation between the desired following distance *d_{driver}* and the target following distance *dₜₐᵣ* due to safety or energy consumption reasons.

The ACC is configured to control the propulsion arrangement 11 and the brakes 12, 13 to keep the target following distance *dₜₐᵣ* as well as possible, while also considering driving comfort, tear, energy consumption and safety. In order to calculate the target following distance *dₜₐᵣ* the ACC system is configured to monitor a driving style of the followed vehicle 2 and to determine an expected value of deceleration of the followed vehicle 2. The estimated value of deceleration may consider various parameters such as speed of the followed vehicle 2, map data, vehicle type etc. In other words, the ACC typically attempts to drive as similar to a human being as possible. When an ACC brakes the vehicle to maintain the target following distance *dₜₐᵣ* the secondary brakes are typically used as much as possible. However, if the vehicle 1 comes too close to the followed vehicle 2 the primary brakes 12 are also actuated. The distance where the primary brakes 12 are automatically actuated to avoid collision, is herein referred to as a safety distance *d_{WB}.*

Hence, the ACC controls an amount of propelling torque applied until the vehicle 1 reaches, or is about to reach, the target following distance *dₜₐᵣ.* At the target following distance *dₜₐᵣ* the vehicle is typically allowed to roll freely for a while, even if it exceeds the target following distance *dₜₐᵣ,* as unnecessary braking typically waste energy. The zone when neither torque nor braking force is applied is herein referred to as a power saving zone 4. However, before the vehicle 1 approaches the safety distance *d_{WB}* a braking force is typically applied using secondary brakes in order to avoid using primary brakes. The distance where the secondary brakes 13 are automatically actuated to maintain the target following distance *dₜₐᵣ,* is herein referred to as a brake actuation distance *d_{AB}.*

Hence, the secondary brakes 13 shall preferably be activated early enough to ensure that the vehicle 1 never reaches the safety distance *d_{WB}.* How early the secondary brakes 13 have to be actuated depends on the braking capacity of the secondary brakes 13. In other words, the brake actuation distance *d_{AB}* depends on how much braking torque the secondary brakes 13 can generate at a certain point in time. Sometimes the brake actuation distance *d_{AB}* may also be adjusted based on map data and friction. However, the inventors have realised that such an adjustment does not provide a balanced following distance in bad road conditions. The reason is that the need to take road conditions into account is tightly related to other factors such as driving environment and vehicle properties. Hence, it is herein proposed to improve the estimation of braking capacity by not only considering vehicle properties and map data, but to also consider road conditions and to then base the brake actuation distance *d_{AB}* on the improved estimation of braking capacity. It shall be noted that in case heavy braking is required the wheel brakes may be activated before the vehicle reaches the safety distance *d_{WB}.*

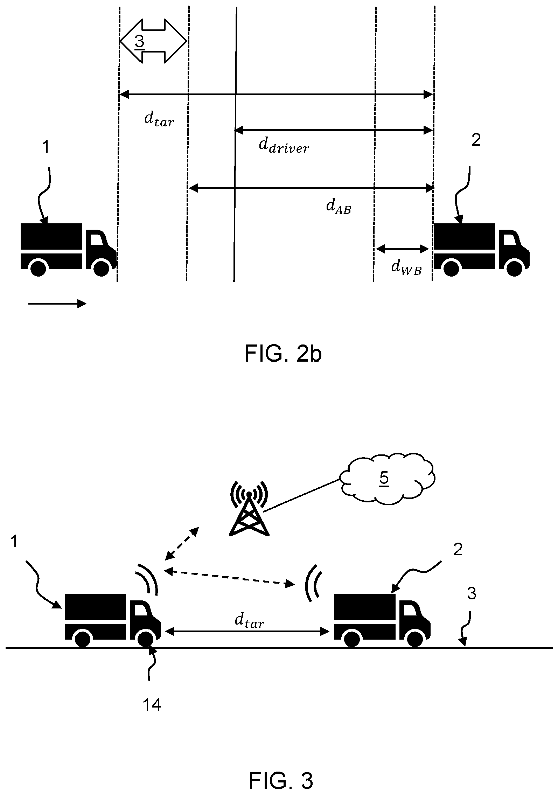

Fig. 2b illustrates how the brake actuation distance *d_{AB}* may be adjusted based on friction data on a slippery road. In this example, the brake actuation distance *d_{AB}* is longer than the configured following distance *d_{driver}* set by the driver. In some scenarios this may also affect the target following distance *dₜₐᵣ,* as it is typically desirable that the power saving zone 4 is not too short. Hence, in this example both the brake actuation distance *d_{AB}* and the target following distance *dₜₐᵣ* have been increased due to low friction. This means that on slippery roads (when the friction is below a certain limit) the vehicle 1 will start braking in advance, i.e. before it has reached the configured following distance *d_{driver}* set by the driver.

The proposed concept operating a vehicle comprising secondary brakes will now be described with reference to Figs. 3-5.

Fig. 3 illustrates a vehicle 1 obtaining friction data. Friction data may be obtained in various ways such as by calculating the friction data based on sensor readings and vehicle properties. For example, data from one or more of an image sensor, humidity sensor, rain sensor or temperature sensor may be used to estimate the friction coefficient according to commonly known methods. Alternatively, friction data may be received from other vehicles 2, from road objects, or from a data storage 5, such as a cloud server accessible by several vehicles. Hence, the vehicle 1 may be configured to communicate with such objects using Vehicle-to-Everything, V2X communication or using other communication technologies.

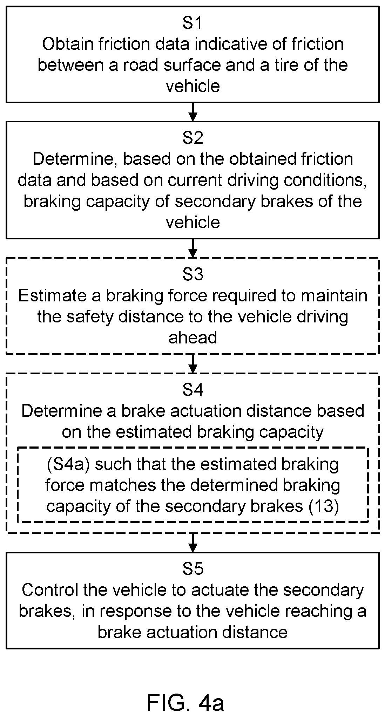

Fig. 4a illustrates the proposed method for controlling operation of a vehicle 1 comprising secondary brakes 13. In some embodiments, the secondary brakes 13 comprises regenerative brakes and/or auxiliary brakes.

The method is for use in a control arrangement, such as the control arrangement 10 of the vehicle 1 (Fig. 1). The method is typically performed during normal operation of the vehicle 1 (Fig. 1), such as when an ACC is activated to control speed of the vehicle 1. Alternatively, the method may be performed to control operation of an autonomous vehicle.

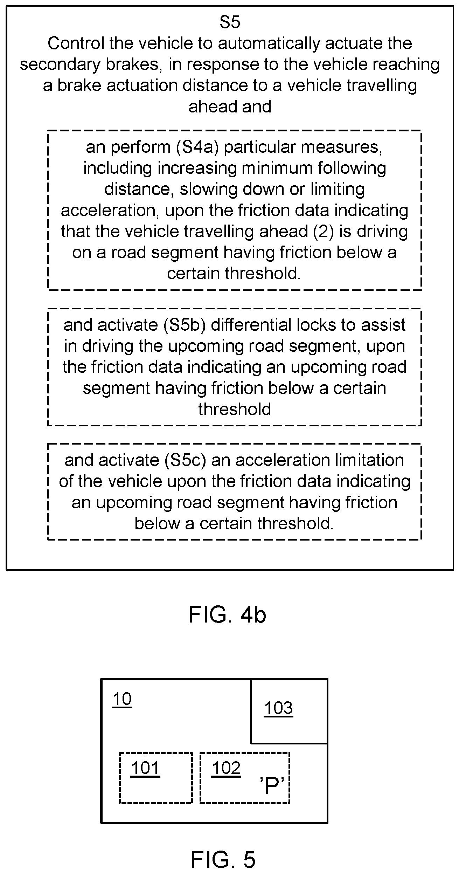

The method may be implemented as computer program comprising instructions which, when the program is executed by a computer (e.g., a processor in the control arrangement 10 (Fig. 4)), cause the computer to carry out the methods. According to some embodiments the computer program is stored in a computer-readable medium (e.g., a memory or a compact disc) that comprises instructions which, when executed by a computer, cause the computer to carry out the method.

The method comprises obtaining S1 friction data indicative of friction between a road surface 3 and a tire 14 of the vehicle. In some embodiments the friction data comprises a coefficient of friction of a road on which the vehicle is driving, or on which it is about to drive. Hence, the friction data may indicate current or expected friction.

As explained above capacity of the secondary brakes 13 is thereafter determined based on the obtained friction data. The braking capacity of the secondary brakes 13 is limited by two factors: the maximum force that the secondary brakes 13 can apply on the tires, and the maximum force the tires can apply on the road, where the latter depend on the friction between the tires and the road surface. In other words, the method further comprises determining S2, based on the obtained friction data and based on current operating conditions of the vehicle 1, braking capacity of the secondary brakes 13. In addition to the friction a variety of other parameters associated with operating conditions may be considered in the determining S2. For example, the maximum force that the secondary brakes 13 can apply may depend on temperature, velocity, tear, acceleration and for regenerative brakes also on battery State of Charge, SoC. The maximum force the tires can apply on the road may on the other hand depend on vehicle properties, such as tire characteristics, axle load, level of tear, humidity, tire pressure etc. In other words, in some embodiments the current operating conditions comprises one or more of tire characteristics, temperature, level of tear, humidity, pressure, axle load and battery State of Charge, SoC.

The determining S2 is typically performed using a set of rules, such as a formula or model of the secondary brakes 13. In other words, in some embodiments, the determining S2 is based on braking capacity criteria defining braking capacity based on the obtained friction data and based on current operating conditions.

In some embodiments, one might want to set the brake actuation distance *d_{AB}* to be long enough to assure that the secondary brakes 13 will be able to keep the vehicle 1 at a distance that is longer than the safety distance *d_{WB}* without using primary brakes 12. This means that the brake actuation distance *d_{AB}* will vary based on speed, inclination, friction, vehicle properties etc., as well as depending on driving conditions of the followed vehicle 2. In other words, in some embodiments, the brake actuation distance *d_{AB}* is long enough to ensure that a braking force required to maintain a safety distance *d_{WB}* to the vehicle travelling ahead 2, does not exceed the estimated braking capacity of the secondary brakes 13. This means for example that the brake actuation distance is increased if a speed difference between the vehicle and the vehicle travelling ahead is significant as stronger braking is required.

In particular it may be desirable to ensure that the braking force required to maintain a safety distance *d_{WB}* where primary brakes 13 are automatically actuated does not exceed the capacity of the secondary brakes 13. This may be accomplished by evaluating driving pattern and predicting braking behaviour of the followed vehicle 2. For example, an expected value of braking of the followed vehicle 2 may be compared with a braking distance that the braking capacity results in under current driving conditions, such as weather conditions, velocity, acceleration, map data, etc. A braking force corresponding to the braking distance is then estimated. In other words, in some embodiments, the method comprises estimating S3 a braking force required to maintain the safety distance *d_{WB}* to the vehicle travelling ahead 2 based on operating conditions of the vehicle 1, and one or more of: physical properties, braking behaviour, driving speed and acceleration of the vehicle travelling ahead 2.

The disclosure proposes that the brake actuation distance *d_{AB}* is based on a variety of parameters, including estimated braking capacity. Hence, in some embodiments the method comprises the explicit step of determining S4 a brake actuation distance *d_{AB}* based on the estimated braking capacity. As explained above a variety of parameters may be considered in the determination S4. The determining S4 is typically performed using a set of rules, such as a formula for calculating the brake actuation distance *d_{AB}.* Hence, in some embodiments the brake actuation distance *d_{AB}* is determined based on one or more distance criteria.

The brake actuation distance *d_{AB}* typically depend on the current braking distance that the determined braking capacity results in. Hence, the distance criteria may take a plurality of parameters as input. Even if the braking capacity is known, the braking distance depend on current driving conditions such as speed (in particular speed difference between the vehicle 1 and the vehicle travelling ahead 2), inclination etc. Hence, these parameters have to be taken into account when setting a brake actuation distance *d_{AB}.* In addition, additional adjustments may be performed based on, for example, road conditions and inclination to provide a balance between power saving, safety, tear, noise, comfort, etc. Hence, the brake actuation distance *d_{AB}* depend on braking distance of the secondary brakes 13 for the determined braking capacity and the current operating condition.

If a braking force required to maintain the safety distance *d_{WB}* to the vehicle travelling ahead 2 has been estimated S3, then the determining S4 is performed based on the estimation. Hence, in some embodiments the determining S4 comprises determining S4a the brake actuation distance *d_{AB}* such that the estimated braking force matches the determined braking capacity of the secondary brakes 13. In other words, a brake actuation distance *d_{AB}* is selected to ensure that the braking force required to maintain a safety distance does not exceed the capacity of the secondary brakes.

However, if all possible braking manoeuvres of the followed vehicle 2 shall be considered the brake actuation distance *d_{AB}* may be very long, which may be undesirable for other reasons. This may be resolved by simply disregarding unlikely braking in the estimation S3 of braking force required to maintain the safety distance *d_{WB}.* One can simply risk that the primary brakes 12 will have to be actuated in the event of abrupt braking, as it is unlikely to happen. In other words, in some embodiments, required braking forces above a certain level are disregarded as a basis for the brake actuation distance.

What braking should be disregarded may be determined based on driving history of the followed vehicle 2. For example, braking forces larger than braking forces applied in the last 10 minutes may be disregarded. This may of course depend on the type of driving and would change if the vehicle 1 enters another type of road (e.g., a road with another speed limitation) or if traffic conditions change. In other words, in some embodiments, the certain level corresponds to a braking force applied by the vehicle 1, and/or a measured braking force applied by the vehicle travelling ahead 2, during a certain preceding time period.

As explained above, brake actuation distance *d_{AB}* may in some situations be longer that the configured following distance *d_{driver}* (See Fig. 2b). Hence, the vehicle 1 may automatically start braking before it has reached the configured following distance *d_{driver}* set by the driver. In other words, in some embodiments, the brake actuation distance *d_{AB}* is longer than a configured following distance *d_{driver},* upon the determined braking force falling below a predefined value.

The vehicle 1 is then controlled to maintain the target following distance *dₜₐᵣ.* This involves controlling driving torque and braking, either by an ACC or alternatively by an autonomous driving function. In other words, the method comprises controlling S5 the vehicle to automatically actuate the secondary brakes, in response to the vehicle reaching a brake actuation distance *d_{AB}* to a vehicle travelling ahead 2, wherein the brake actuation distance *d_{AB}* is based on the estimated braking capacity of the secondary brakes 13.

The controlling S5 may also consider particular road conditions indicated by the friction data. Fig. 4b illustrates details of the particular embodiments of the controlling S5 in further detail. For example, it may be a driver preference to allow increase of the determined brake actuation distance *d_{AB}* and/or target following distance *dₜₐᵣ* if it is extremely low friction. This can only be up to the furthest the radar can see or however far it is possible to detect vehicles with high reliability vehicle sensors. In some embodiments, this may involve a driver tip for manual driving or that the ACC disengages because it is such low friction that it must back beyond the brake actuation distance *d_{AB}.* It shall be noted that the steps of Fig. 4b may be performed independently on the preceding steps S2-S4. For example, if the road condition is very poor the ACC may activate a speed limitation or increase the following distance with an additional amount. In other words, in some embodiments, the controlling S5 comprises, performing S5a particular measures, including increasing the minimum following distance, slowing down or limiting acceleration, upon the friction data indicating that the vehicle travelling ahead 2 is driving on a road segment having friction below a certain threshold.

It may also be feasible to let the ACC take additional measures to increase safety in bad road conditions, such as due to low friction or expected low friction. For example, if the friction data indicate that a low friction patch is upcoming and map data identifies that the road is not too curvy (too small curve radius) then the vehicle could activate certain differential locks to assist with driving on this patch. In other words, in some embodiments, the controlling S5 comprises activating S5b differential locks upon the friction data indicating an upcoming road segment having friction below a certain threshold.

Another possibility is to activate an acceleration limitation. In other words, in some embodiments, the controlling S5 comprises activating S5c an acceleration limitation of the vehicle upon the friction data indicating an upcoming road segment having friction below a certain threshold.

It may be beneficial to activate an indicator to inform the driver that lane change would quit some of these acceleration limits so that the driver can accelerate. Hence, in some embodiments, the controlling S5 comprises providing an indication to a driver to change lane, wherein the lane change deactivates the acceleration limitation.

Fig. 5 illustrates a control arrangement 10 configured to perform the proposed method of operating a vehicle comprising secondary brakes 13. The control arrangement 10 may be arranged in the vehicle 1 (Fig. 1). The control arrangement 10 comprises control circuitry to perform the method according to any one of the steps, examples or embodiments as described herein. The control arrangement 10 may include one or more Electronic Control Units (ECUs). For example, the control arrangement 10 may be an Electrical Control Unit, ECU, of the ACC.

More in detail, the control arrangement 10 comprises one, or more, computer(s) 101 and memory 102. The computer 101 comprises any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner. In some embodiments, the computer-readable medium may be a non-transitory computer-readable medium, such as a tangible electronic, magnetic, optical, infrared, electromagnetic, and/or semiconductor system, apparatus, and/or device. The computer-readable memory is for example one or more of the memories in the control arrangement 10. Hence, the proposed method may be implemented as a computer program. The computer program then comprises instructions which, when the computer program is executed by a computer, cause the computer to carry out the method according to any one of the aspects, embodiments or examples as described herein.

In some embodiments the control arrangement 10 comprises a communication interface 103 configured to enable wireless communication with off-board devices, such as with other vehicles, road objects or with a data storage, such as a cloud server. This communication may be performed via a Controller Area Network, CAN, or directly via an embedded modem.

More specifically, the control arrangement 10 is configured to obtain friction data indicative of friction between a road surface 3 and a tire 14 of the vehicle, and to determining, based on the obtained friction data and based on current operating conditions of the vehicle 1, braking capacity of the secondary brakes 13. The control arrangement 10 is also configured to control, the vehicle to automatically actuate the secondary brakes, in response to the vehicle reaching a brake actuation distance *d_{AB}* to a vehicle travelling ahead 2, wherein the brake actuation distance *d_{AB}* is based on the estimated braking capacity of the secondary brakes.

In further embodiments, the control arrangement is configured to perform the method according to any one of the embodiments described in connection with Figs. 4a and 4b.

The terminology used in the description of the embodiments as illustrated in the accompanying drawings is not intended to be limiting of the described method, control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

The present disclosure is not limited to the above-described preferred embodiments. Various alternatives, modifications and equivalents may be used. Therefore, the above embodiments should not be taken as limiting the scope of the disclosure, which is defined by the appending claims.

## Claims

1. A method for controlling operation of a vehicle (1) comprising secondary brakes (13), the method comprising:
- obtaining (S1) friction data indicative of friction between a road surface (3) and a tire (14) of the vehicle,
- determining (S2), based on the obtained friction data and based on current operating conditions of the vehicle (1), braking capacity of the secondary brakes (13), and
- controlling (S5) the vehicle to automatically actuate the secondary brakes, in response to the vehicle reaching a brake actuation distance (*d_{AB}*) to a vehicle travelling ahead (2), wherein the brake actuation distance (*d_{AB}*) is based on the estimated braking capacity of the secondary brakes (13).

2. The method according to claim 1, wherein the brake actuation distance (*d_{AB}*) is long enough to ensure that a braking force required to maintain a safety distance (*d_{WB}*) to the vehicle travelling ahead (2), does not exceed the estimated braking capacity of the secondary brakes (13).

3. The method according to claim 2, wherein the safety distance (*d_{WB}*) corresponds to a distance where primary brakes (13) are automatically actuated.

4. The method according to claim 2 or 3, wherein required braking forces above a certain level are disregarded as a basis for the brake actuation distance.

5. The method according to claim 4, wherein the certain level corresponds to a braking force applied by the vehicle (1), and/or a measured braking force applied by the vehicle travelling ahead (2), during a certain preceding time period.

6. The method according to any one of the preceding claims, wherein the brake actuation distance (*d_{AB}*) is adjusted based on the friction data and/or road inclination.

7. The method according to any one of the preceding claims, wherein the brake actuation distance (*d_{AB}*) is longer than a configured following distance (*d_{driver}*) upon the determined braking force falling below a predefined value.

8. The method according to any one of the preceding claims 2-8, wherein the method comprises:
- estimating (S3) a braking force required to maintain the safety distance (*d_{WB}*) to the vehicle travelling ahead (2) based on:
• operating conditions of the vehicle (1), and
• one or more of: physical properties, braking behaviour, driving speed and acceleration of the vehicle travelling ahead (2), and
- determining (S4a) the brake actuation distance (4) such that the estimated braking force matches the determined braking capacity of the secondary brakes (13).

9. The method according to any one of the preceding claims, wherein the brake actuation distance (*d_{AB}*) depend on braking distance of the secondary brakes (13) for the determined braking capacity and the current operating condition.

10. The method according to any one of the preceding claims, wherein the current operating conditions comprises one or more of road inclination, temperature, velocity, acceleration, historic or predicted braking behavior, map data, axle load, weather conditions and battery State of Charge, SoC.

11. A computer program comprising instructions which, when the computer program is executed by a computer, cause the computer to carry out the method according to any one of the preceding claims.

12. A computer-readable medium comprising instructions which, when executed by a computer, cause the computer to carry out the method according to any one of the claims 1 to 10.

13. A control arrangement (10) configured to operating a vehicle comprising secondary brakes (13), wherein the control arrangement is configured:
- to obtain friction data indicative of friction between a road surface (3) and a tire (14) of the vehicle,
- to determining, based on the obtained friction data and based on current operating conditions of the vehicle (1), braking capacity of the secondary brakes (13), and
- to control, the vehicle to automatically actuate the secondary brakes, in response to the vehicle reaching a brake actuation distance (*d_{AB}*) to a vehicle travelling ahead (2), wherein the brake actuation distance (*d_{AB}*) is based on the estimated braking capacity of the secondary brakes.

14. The control arrangement (10) according to claim 13, wherein the control arrangement is configured to perform the method according to any one of claims 1-10.

15. A vehicle comprising the control arrangement (10) according to claim 13 or 14.
